# EUROPEAN PATENT APPLICATION

(11) **EP 2 157 794 A2**
(43) Date of publication of application: **24.02.2010**
(21) Application number: 09164278.5
(22) Date of filing: 01.07.2009
(51) Int. Cl.: H04N 7/18

(54) **Multiplexing imaging system for area coverage and point targets**

(30) Priority: 31.07.2008 US 183702
(71) Applicant: ITT Manufacturing Enterprises, Inc., Wilmington, Delaware 19801 (US)
(72) Inventor: Tantalo, Theodore A., Greece, NY 14626 (US); Hahm, Timothy, P., Hilton NY 14468 (US); Brower, Bernhard, Webster NY 14580 (US)
(74) Representative: Dreiss

(57) **Abstract**

A system for imaging a scene. The system includes a plurality of cameras, each camera including an image sensor and a field steering mirror. The system also includes a controller and a storage device. The controller is coupled to the cameras and the storage device and is configured to direct the field steering mirrors of the cameras to collect a plurality of image tiles of a scene. The is also configured to store the image tiles in the storage device with time stamps and location information.

## Description

### FIELD OF THE INVENTION

The present invention generally relates to image processing and, more specifically, to controlling a bank of cameras having field steering mirrors for capturing a plurality of image tiles of a scene and mosaicking such tiles into a composite image.

### BACKGROUND OF THE INVENTION

Generally, when an overhead surveillance system tries to maximize spatial resolution, it does so at the expense of diminished area coverage. The opposite is also true: Maximizing area coverage is done at the expense of diminished spatial resolution. Various techniques attempt to maximize spatial resolution for a given area coverage.

A camera having a sensor with a fixed array size (M x N) of pixels may capture more area by reducing its focal length. The focal length may be reduced by "zooming out," i.e., increasing the angular field-of-view (herein "FOV") of the camera. This may be seen when the camera "pans back." Since the number of pixels in the camera is a constant M x N array size, when the area coverage is increased, the spatial resolution per pixel is reduced. When the camera "zooms in," i.e., when the angular FOV of the camera is decreased, however, the spatial resolution per pixel is increased, resulting in better image detail, with overall area coverage being proportionally reduced.

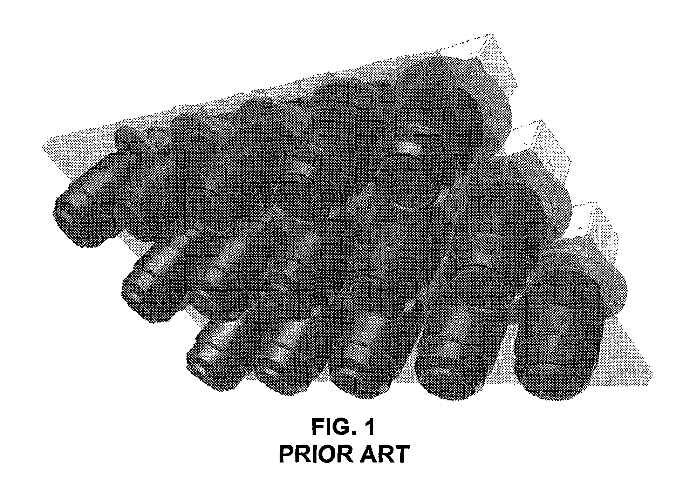

One technique that may be employed to increase spatial resolution and FOV is to use a bank of cameras arranged next to each other in an array pattern, as shown in FIG. 1. Each camera has a high spatial resolution, and is pointed in a slightly different direction, so as to have a small amount of overlap with neighboring cameras. Images are collected from all cameras, simultaneously. A large FOV mosaic, having a high spatial resolution, is then synthesized from the individual images.

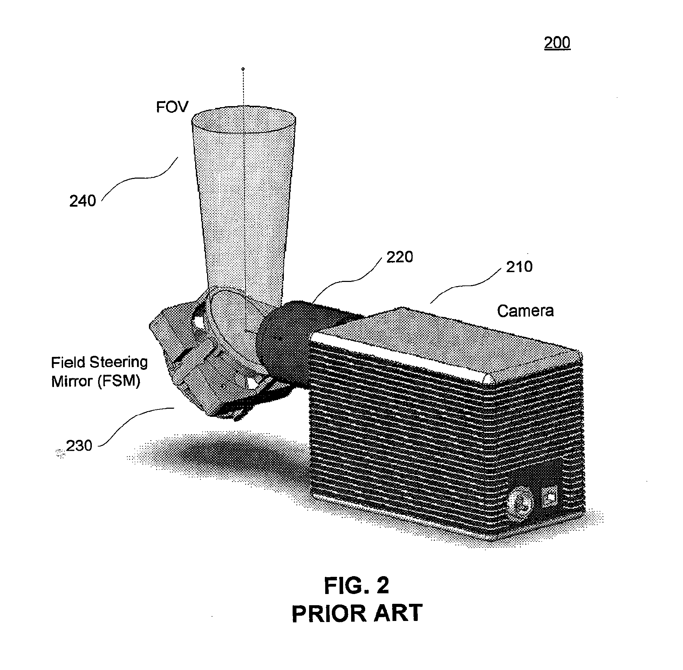

Another technique uses a movable mirror (also referred to herein as a "field steering mirror" or "FSM") in front of a camera to steer the FOV of the camera as shown in FIG. 2. As shown, a camera system 200 includes the field steering mirror 230 (also referred to herein as "FSM 230") for camera 210. The FSM 230 is a movable mirror that directs light through a lens aperture 220 for sensing by an image sensor array (not illustrated) disposed within camera 210. The source of the light entering lens aperture 220 is directed by moving, or steering, FSM 230 to form FOV 240 of camera 210. For purposes of description herein, a camera system that includes a camera and an FSM is referred to as "an FSM camera system" or "an FSM camera."

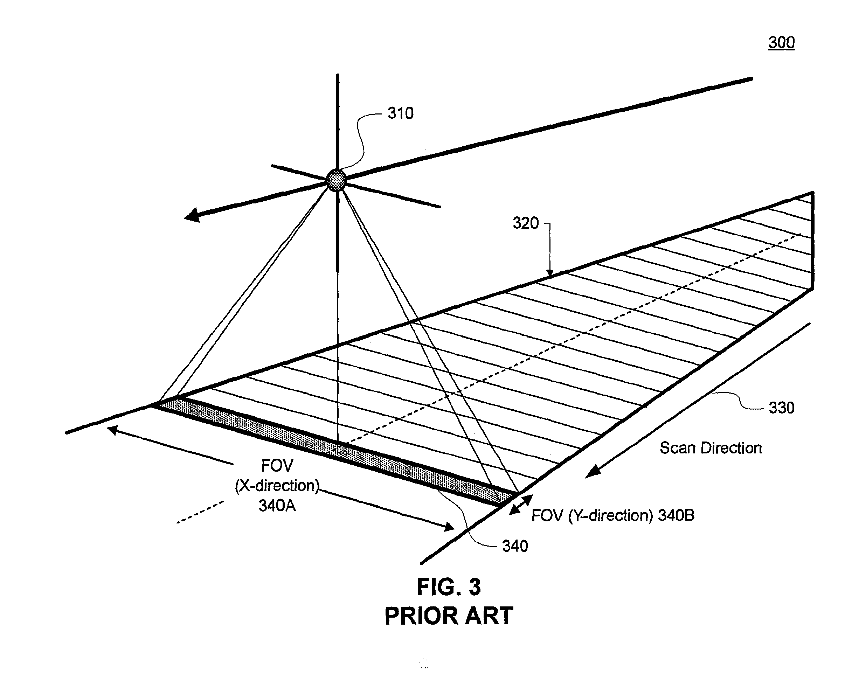

A third technique increases spatial resolution and FOV by using a large linear scanner. FIG. 3 illustrates a technique for linearly scanning a scene using a linear scanner, generally designated as 300. As shown, camera 310, having FOV 340, is linearly translated across scene 320, in scan direction 330. FOV 340, whose shape depends on the topography of the region being scanned and whose spatial resolution degrades as the line of sight distance increases, is simplistically represented as an elongated rectangle, having X dimension 340A and Y dimension 340B. The FOV 340 is translated in scan direction 330, generally through platform motion, to create a large effective swath over scene 320.

### SUMMARY OF THE INVENTION

In one aspect, an embodiment of the invention comprises a system for imaging a scene. The system includes a plurality of cameras, each camera including an image sensor and a field steering mirror. The system also includes a controller coupled to the cameras and a storage device coupled to the cameras and the controller. The controller is configured to coordinate the field steering mirrors of the cameras to collect a plurality of image tiles of a scene using the cameras. The storage device is configured to receive the collected image tiles and store the collected image tiles with associated location data. In an exemplary embodiment, the controller is further configured to mosaic stored image tiles into a composite image.

In another aspect, another embodiment of the invention comprises a controller for a bank of cameras. Each camera includes a field steering mirror. The controller is configured to direct the field steering mirrors of the cameras to collect a plurality of image tiles of a scene and store the image tiles in a storage device. Each of the image tiles is stored with location data identifying a location in the scene corresponding to the collected image tile.

In yet another aspect, yet another embodiment of the invention comprises a method of imaging a scene. The method comprises partitioning a scene into a plurality of regions and partitioning each of the plurality of regions into a plurality of portions. The method further comprises collecting an image tile of each of the plurality of portions of the regions in a predetermined order using a camera having a field steering mirror and storing each of the collected image tiles each with a time stamp and location data.

In still another aspect, yet another embodiment of the invention comprises a bank of cameras. Each camera includes a field steering mirror, and the bank of cameras include a plurality of controllers and a data bus coupled to each controller. Each controller is coupled to a respective camera and is configured to direct the field steering mirror of the respective camera to collect a plurality of image tiles for a scene using the respective camera. The data bus is configured to be coupled to a data recorder to store the plurality of image tiles collected by each camera with associated location data for each collected image tile.

The invention comprises a system for imaging a scene, comprising a plurality of cameras, each camera including a field steering mirror; a controller coupled to the cameras, the controller configured to coordinate the field steering mirrors of the cameras to collect a plurality of image tiles of a scene using the cameras; and a storage device coupled to the cameras and the controller, the storage device configured to receive the collected image tiles and store the collected image tiles with associated location data. In inventive embodiments, which can be combined, the controller is further configured to partition the scene into a plurality of regions and to direct the field steering mirror of each camera to collect image tiles of a respective region. Further the controller is further configured to partition each of the regions into a plurality of portions and to direct the field steering mirror of each camera to collect an image tile of each portion of a respective region, thereby collecting the plurality of image tiles. Further the controller is further configured to calculate a path for a movement of a field of view of each camera through its respective region and to direct the field steering mirror of each camera to move its field of view along the calculated path to collect the image tiles. Further the controller is configured to direct the field steering mirror of each camera to move the field of view of each camera from an end of the calculated path to a beginning of the calculated path after a last image tile of the respective region for each camera is collected. Further the controller is further configured to mosaic image tiles stored in the storage device into a composite image. Further the regions are contiguous and adjacent collected image tiles overlap one another. Further one or more of the regions overlap one another, and the controller is further configured to collect the image tiles for the one or more regions by phasing the collection of the image tiles for the one or more regions from one another. Further the one or more regions are arranged concentrically, and the controller is further configured to collect video of a central region using a first one of the cameras; direct the field steering mirrors of cameras other than the first one to collect a plurality of image tiles of the one or more regions other than the central region; and store the collected video and the collected plurality of image tiles of the one or more regions other than the central region in the storage device. Further one or more of the regions overlap one another, and the controller is further configured to collect the image tiles for the one or more regions by synchronizing the collection of the image tiles for the one or more regions.

The invention comprises further a controller for a bank of cameras, each camera having a field steering mirror, the controller configured to direct the field steering mirrors of the cameras to collect a plurality of image tiles of a scene; and store the collected image tiles in a storage device, each of the collected image tiles being stored with location data identifying a location in the scene corresponding to the collected image tile. In inventive embodiments, which can be combined, The controller is further configured to partition the scene into a plurality of regions and to direct the field steering mirror of each camera to collect image tiles of a respective region. Further the controller is further configured to partition each of the regions into a plurality of portions and to direct the field steering mirror of each camera to collect an image tile of each portion of a respective region, thereby collecting the plurality of image tiles. Further the controller is further configured to calculate a path for a movement of a field of view of each camera through its respective region and to direct the field steering mirror of each camera to move its field of view along the calculated path to collect the image tiles. Further the controller is configured to direct the field steering mirror of each camera to move the field of view of each camera from an end of the calculated path to a beginning of the calculated path after a last image tile of the respective region for each camera is collected. Further one or more of the regions overlap one another and the controller is further configured to collect the image tiles for the one or more regions by phasing the collection of the image tiles for the one or more regions from one another. Further one or more of the regions overlap one another and the controller is further configured to collect the image tiles for the one or more regions by synchronizing the collection of the image tiles for the one or more regions. Further the controller is further configured to direct one of the cameras to collect a video of a portion of the scene while using other cameras to collect image tiles at a temporal resolution less than or equal to a maximum frame rate of the other cameras. Further the controller is further configured to direct each of the cameras to collect video by phasing the video collection of each camera from one another.

The invention comprises further a method of imaging a scene, the method comprising the steps of partitioning a scene into a plurality of regions; partitioning each of the plurality of regions into a plurality of portions; collecting an image tile for each of the plurality of portions of the regions in a predetermined order using a camera having a field steering mirror; and storing the collected image tiles, each with a time stamp and location data. In inventive embodiments, which can be combined, the method further comprising the steps of receiving a selection of a time and a location from a user; retrieving stored image tiles each having a time stamp and location data corresponding to the selected time and location; and mosaicking the retrieved image tiles into a composite image. The method further comprising capturing a portion of the scene as a video; and storing the video with time and location data. The method further the step comprises the steps of receiving a selection of a time frame and a location from a user; retrieving stored image tiles each having a time stamp within the selected time frame and location data corresponding to the selected location; retrieving a portion of the stored video, the portion corresponding to the selected time frame and the selected location; for all retrieved image tiles, mosaicking the retrieved image tiles having identical time stamps into a composite image; combining composite images formed in the above step into a video; and combining the video resulting from the above step with the retrieved portion of the stored video.

The invention comprises further a bank of cameras comprising a plurality of field steering mirrors, each camera being associated with one of the field steering mirrors; a plurality of controllers, each controller coupled to a respective camera and configured to direct the field steering mirror associated with the respective camera to collect a plurality of image tiles for a scene; and a data bus coupled to each controller, the data bus configured to be coupled to a data recorder to store the plurality of image tiles collected by each camera with associated location data for each collected image tile. In inventive embodiments, which can be combined, the scene is partitioned into a plurality of regions and each controller is further configured to direct the field steering mirror associated with the respective camera to collect a plurality of image tiles for a respective region. Further each controller is further configured to calculate a path for a movement of a field of view of the respective camera through the respective region and to direct the field steering mirror associated with the respective camera to move its field of view along the calculated path to collect the plurality of image tiles for the respective region. Further two or more of the cameras are associated with a same one of the field steering mirrors, the one of the field steering mirrors being controlled by one of the controllers to collect image tiles for the two or more of the cameras.

### BRIEF DESCRIPTION OF THE DRAWINGS

The invention may be understood from the following detailed description when read in connection with the accompanying figures:
FIG. 1 is an illustration of a conventional bank of cameras for forming a composite image;
FIG. 2 is an illustration of a conventional camera system having a field steering mirror for effectively increasing the FOV of the camera system;
FIG. 3 is an illustration of a conventional linear scanner configured to translate a camera across a scene and, thereby, increase the effective FOV of the camera;
FIG. 4 illustrates an embodiment of a bank of cameras, each having a field steering mirror, in accordance with an embodiment of the invention;
FIG. 4A illustrates a collection and processing system for the bank of cameras illustrated in FIG. 4, in accordance with an embodiment of the invention;
FIG. 4B illustrates another collection and processing system for the bank of cameras illustrated in FIG. 4, in accordance with an embodiment of the invention;
FIG. 5 illustrates another embodiment of a bank of cameras, each having a field steering mirror, in accordance with an embodiment of the invention;
FIG. 6 illustrates a method for imaging a scene by partitioning the scene into several regions, collecting image tiles for each of the regions, storing the collected image tiles, and mosaicking the collected image tiles into a composite image representative of the scene, in accordance with an exemplary embodiment of the invention;
FIG. 7 illustrates a method for imaging a scene by partitioning the scene into 12 regions, collecting nine image tiles for each of the 12 regions, and mosaicking the collected image tiles into a composite image representative of the scene, in accordance with an exemplary embodiment of the invention;
FIG. 8 illustrates another method for imaging a scene by partitioning the scene into 12 regions, collecting nine image tiles for each of 11 of the regions and video for one of the regions, mosaicking the collected image tiles into a composite image, and adding inlaid video to the composite image, in accordance with an exemplary embodiment of the invention;
FIG. 9 illustrates a method for imaging three unconnected regions of a scene, in accordance with an exemplary embodiment of the invention;
FIG. 10 illustrates a method for imaging regions associated with stationary and moving objects spread throughout and area, in accordance with an exemplary embodiment of the invention;
FIG. 11 illustrates a method for increasing a frame rate of captured video, in accordance with an exemplary embodiment of the invention; and
FIG. 12 illustrates a method for capturing video and imagery for concentric regions of a scene, in accordance with an exemplary embodiment of the invention.

### DETAILED DESCRIPTION OF THE INVENTION

The conventional method of using a bank of cameras, as illustrated in FIG. 1, suffers from numerous disadvantages. In overhead surveillance, such as surveillance systems installed in unmanned aerial vehicles ("UAV"), manned aircraft, or satellites, payload volume and mass is constrained. Packaging a bank of cameras within these constraints is sometimes difficult to accomplish. Often, these constraints require using fewer cameras than optimal for achieving a desired field of view ("FOV"). The result is either a smaller FOV than desired or a reduced spatial resolution.

Power supply constraints also limit the number of cameras used in surveillance systems. Power available onboard satellites, UAVs, and manned aircraft is limited, and the power required by an optimal number of fixed cameras in a bank may exceed the available power. Thus, fewer than the optimal number of cameras may need to be used.

Cost is also a factor in constructing a bank of fixed cameras for overhead surveillance systems. An optimal number of cameras may result in a prohibitively expensive system.

The conventional method of using a single camera having a field steering mirror ("FSM"), such as that illustrated in FIG. 2, suffers from unacceptably low refresh rates for large collection areas and unacceptably small FOVs for adequate refresh rates, and potentially suffers from physical travel limits of an FSM. To capture an area of interest ("AOI"), the FSM must scan and collect individual exposures (also referred to herein as "frames" or "image tiles"). As the collection area is increased, the number of exposures also increases and the refresh rate suffers. To achieve a higher refresh rate, such as at a video rate, the camera system must scan a smaller AOI. Thus, the size of the effective FOV suffers.

Finally, using the linear scanning method illustrated in FIG. 3, achieving high temporal rates with adequate signal-to-noise ratios is difficult. To achieve video rate, an extremely fast scan must be employed. To do so, the exposure of the scanning array to each segment of the scene is usually reduced, thereby causing an increase in the noise of the collected imagery. Further, when the linear scanning method is used from onboard a moving platform, each line of data must be registered independently.

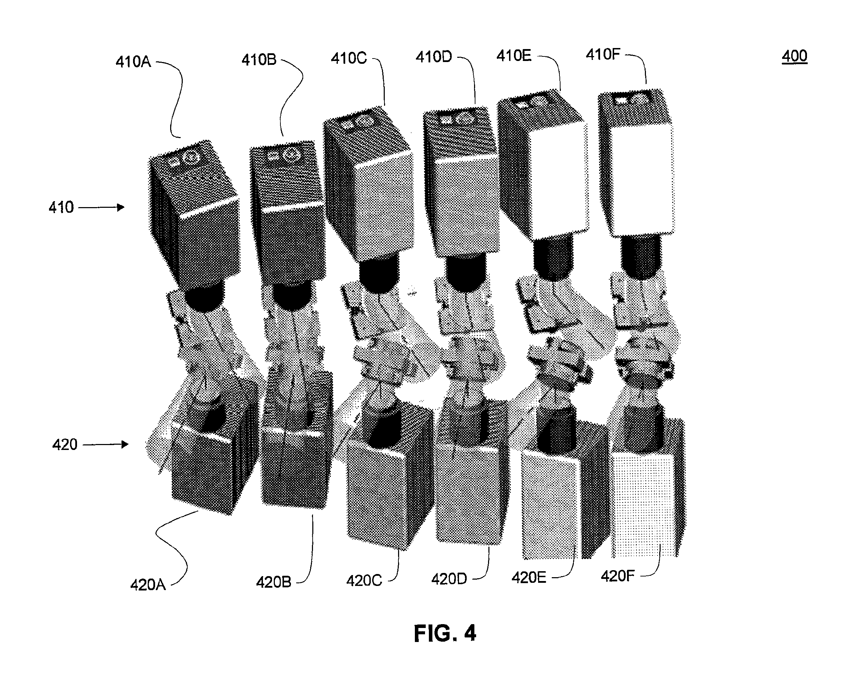

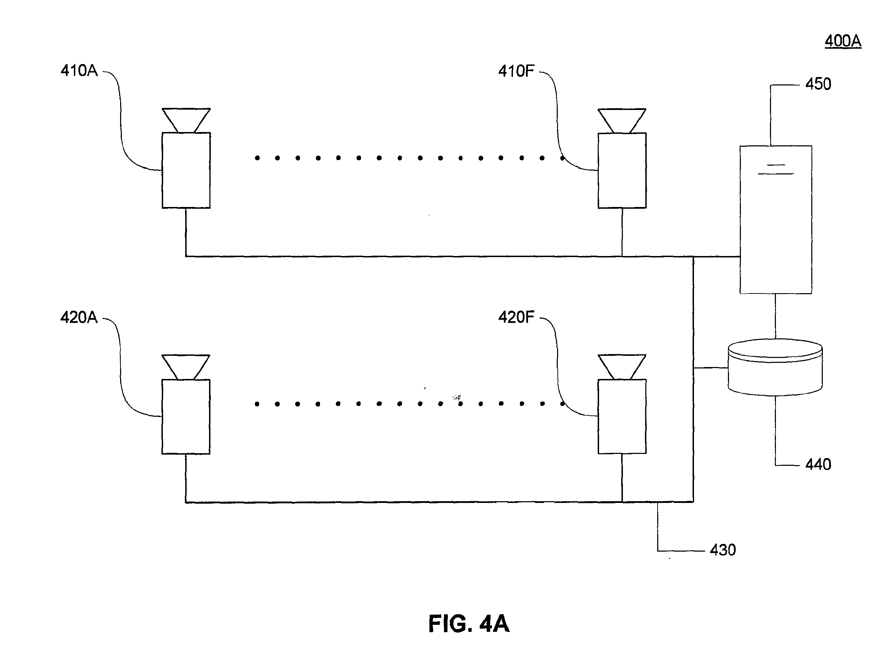

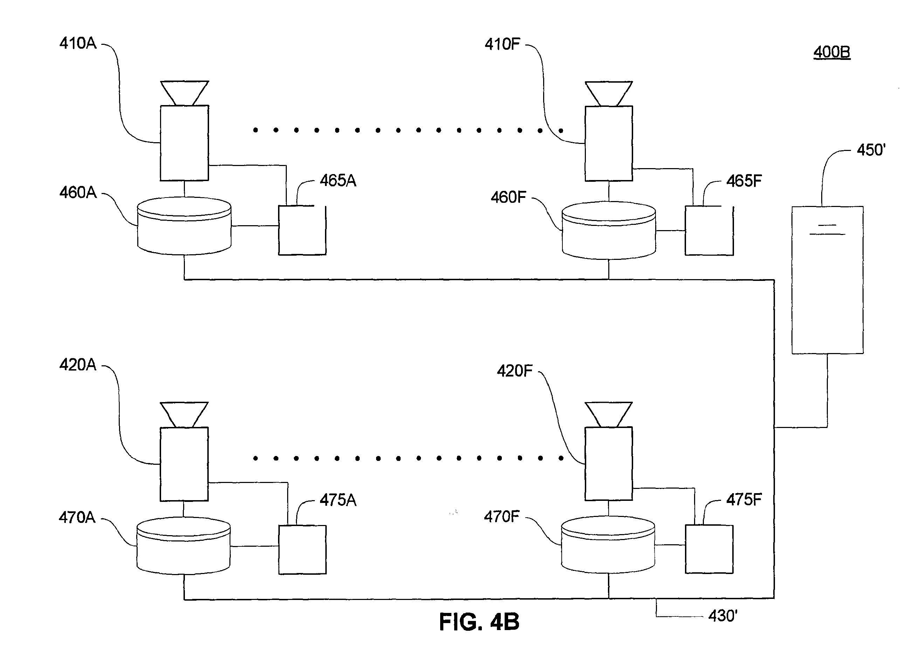

Referring now to FIG. 4, there is illustrated a bank of FSM cameras 400 (also referred to herein as "bank 400"), in accordance with an exemplary embodiment of the invention. The bank 400 includes 12 FSM cameras arranged in two rows. The first row includes six FSM cameras, designated as 410A-F (collectively referred to herein as "cameras 410"), and the second row includes six FSM cameras, designated as 420A-F (collectively referred to herein as "cameras 420"). Each camera includes a field steering mirror (not labeled in FIG. 4) that steers the line of sight ("LOS") (not labeled in FIG. 4) or field of view ("FOV") (not labeled in FIG. 4) of the camera. Although each FSM camera is illustrated in FIG. 4 as having an FSM, other embodiments in which pairs of cameras share an FSM, groups of three cameras share an FSM, etc. are contemplated.

The bank of FSM cameras 400 is used to image multiple regions of a scene. Specifically, each of FSM cameras 410 and 420 may be used to image a separate region of the scene, although embodiments in which two or more of FSM cameras 410 and 420 image the same region or portions of the same region are contemplated. In an exemplary embodiment, bank 400 may be used to scan 12 regions arranged in two rows of six regions. Such an arrangement is referred to herein as a "6 x 2 configuration" for a scene.

As used herein, an "X x Y configuration" describes the layout of regions in a scene, where X represents a number of sub-scenes or regions in an X direction, (i.e., X represents a number of columns,) and Y represents a number of sub-scenes or regions in a Y direction, (i.e., Y represents a number of rows). It is emphasized that the convention X x Y does not refer to the configuration of cameras but that it, instead, refers to the configuration of a scene. Thus, even though bank 400 comprises two rows of six cameras, bank 400 may scan scenes having configurations other than the 6 x 2 configuration described above. For example, bank 400 may scan a scene as 12 regions having a 4 x 3 configuration or a 1 x 12 configuration. In other words, the scene configuration is not theoretically limited by the camera arrangement in bank 400. The camera arrangement is chosen based on the packaging requirements dependent upon the station of bank 400, i.e., how and where it is mounted.

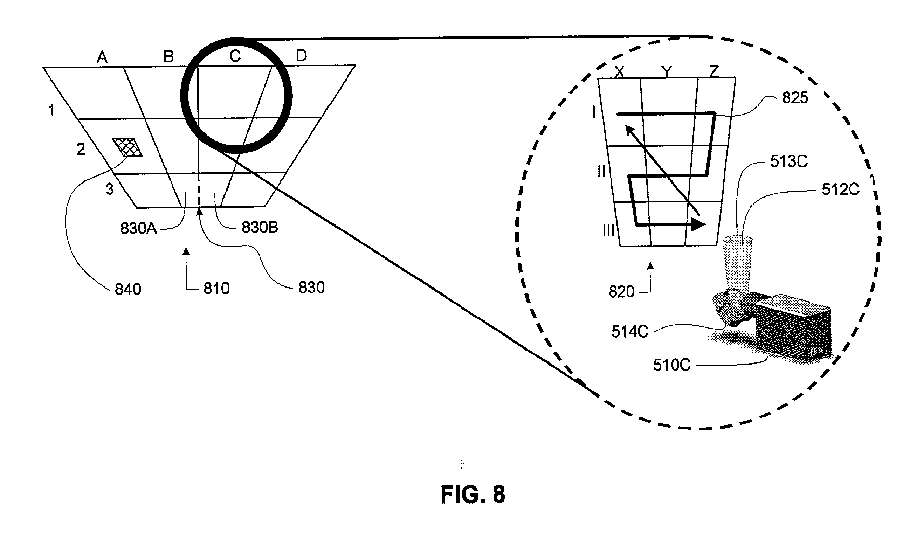

It is contemplated that bank 400 may scan scenes having a number of regions other than 12. For example, bank 400 may scan a scene having fewer than 12 regions. Because the scene has fewer regions and bank 400 includes 12 cameras, two or more of FSM cameras 410 or 420 may image the same region in the scene or portions of the same region in the scene. Examples of such imaging techniques are described later with respect to FIGS. 8, 11 and 12.

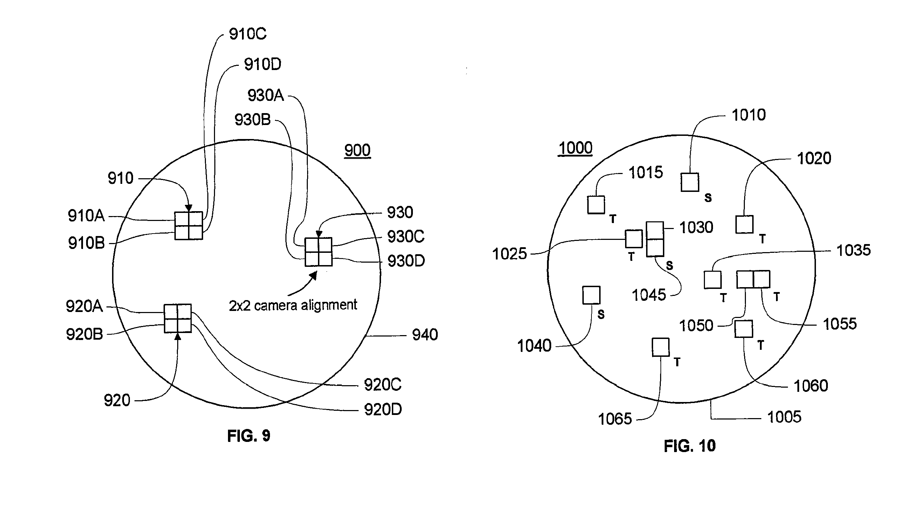

It is also contemplated that bank 400 may scan noncontiguous regions, where some or all of the scanned regions have no overlap at any given time. Thus, bank 400 sparsely samples a larger scene. Examples of such imaging techniques are described later with respect to FIGS 9 and 10.

Cameras 410 and 420 of bank 400 collect image tiles for the regions of the scene that they scan. The collected image tiles are stored by bank 400 or external circuitry (not illustrated in FIG. 4). In an exemplary embodiment, bank 400 or the external circuitry also stores a time stamp for each collected image tile, a frame number for each collected image tile, and data indicating the location of each collected image tile. As described below, image processors may be employed to mosaick the collected image tiles into composite images.

The type of location data collected depends on how bank 400 is mounted, i.e., whether it is mounted on a stationary or moving platform. When mounted on a stationary platform, e.g., a structure such as a tower or building, no particular location data need be collected other than a line of sight map or equation that describes where each pixel for each collected image tile is pointed in angle space, relative to the other pixels. When mounted on a moving platform, e.g., a ground, sea, air, or space vehicle, accurate position and attitude information is collected for each image tile. Position and attitude information is taken from an inertial navigation system ("INS") which relies on an inertial measurement unit ("IMU") and often a GPS receiver. The collection of location data facilitates in real-time or subsequent mosaicking of collected image tiles.

Collected image tiles and any of the (1) time stamps, (2) frame numbers, and (3) the location data are stored in data recorders, such as hard disk drives, hard disk arrays, solid state storage, or any other type of volatile or non-volatile memory or mass storage. Illustrated in FIG. 4A is an exemplary embodiment of a collection and processing system 400A for bank 400. In system 400A, the various cameras 410 and 420 of bank 400 are coupled via a bus 430 to a central data recorder 440 and a central control processor 450 which is also coupled to data recorder 440. Control processor 450 controls cameras 410 and 420 to collect image tiles and store them within data recorder 440. Control processor 450 also stores, in data recorder 440, a time stamp (generated by respective cameras 410 and 420 or by processor 450) that indicates when each image tile was collected and, optionally, a frame number for each collected tile. Control processor 450 also determines the position of each collected image tile and stores location data for each image tile in data recorder 440. As noted above, the location data may include the line of sight map or equation that describes where each pixel for each image tile is pointed in angle space, when, for example, the platform on which cameras 410 and 420 are mounted is stationary. For moving platform applications, the location data includes attitude and position information provided by an INS (not illustrated in FIG. 4A).

In an exemplary embodiment, control processor 450 and data recorder 440 are located within the package in which bank 400 is installed. Thus, collected image tiles are stored locally to cameras 410 and 420 in data recorder 440. In such an embodiment, control processor 450 may be configured to be able to export the collected tiles to external image processing circuitry (not illustrated) for image processing, or control processor 450 may be configured, itself, for image processing. Image processing may include mosaicking stored image tiles into a composite image.

In another exemplary embodiment, control processor 450 and data recorder 440 are located external to the package in which bank 400 is installed. Thus, collected image tiles are stored remotely from cameras 410 and 420 in data recorder 440. In such an embodiment, control processor 450 may be configured to be able to transmit the collected tiles to image processing circuitry (not illustrated) for image processing, or control processor 450 may be configured, itself, for image processing.

Referring now to FIG. 4B, there is illustrated another exemplary embodiment of a collection and processing system 400B for bank 400. In system 400B, the various cameras 410 and 420 of bank 400 are each coupled to respective data recorders 460 and 470 and controllers 465 and 475. Specifically, camera 410A is coupled to a data recorder 460A and a controller 465A; camera 410F is coupled to a data recorder 460F and a controller 465F; camera 420A is coupled to a data recorder 470A and a controller 475A; and camera 470F is coupled to a data recorder 470F and a controller 475F. Although not illustrated, cameras 410B-E and 420B-E are also coupled to respective data recorders and controllers. Controllers 465 and 475 control respective cameras 410 and 420 to collect image tiles and store them in respective data recorders 460 and 470. Controllers 465 and 475 also store time stamps, frame numbers, and location data for the image tiles in respective data recorders 460 and 470.

Cameras 410 and 420 and their respective data recorders 460 and 470 are coupled to a central control processor 450' via a bus 430'. In an exemplary embodiment, control processor 450' coordinates cameras 410 and 420 to collect and store the image tiles in data recorders 460 and 470. Control processor 450' is configured to be able to access the image tiles stored in data recorders 460 and 470 and mosaick them into a composite image.

Control processor 450' may be located within the package in which cameras 410 and 420 are installed. In such an event, control processor 450' may be configured to be able to transmit the collected image tiles to external processing circuitry (not illustrated) for image processing. It is also contemplated that control processor 450' may be located external to the package in which bank 400 is installed.

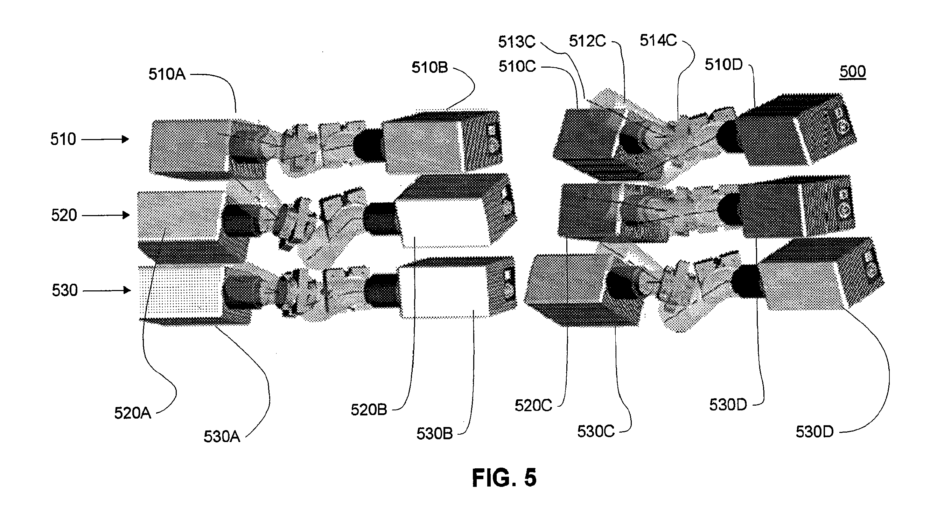

Illustrated in FIG. 5 is another embodiment of a bank of FSM cameras, in accordance with an exemplary embodiment of the invention. As shown, a bank of FSM cameras 500 (also referred to as "bank 500") includes 12 FSM cameras arranged in three rows. The first row includes four cameras, designated 510A-D (collectively referred to as "cameras 510"); the second row includes four cameras, designated 520A-D (collectively referred to as "cameras 520"); and the third row includes four cameras, designated 530A-D (collectively referred to as "cameras 530").

Because the cameras of bank 500 are FSM cameras, each camera includes a field steering mirror that steers the FOV (and LOS) of the camera. For example, FIG. 5 illustrates FSM 514C for steering FOV 512C and LOS 513C of camera 510C. Although not labeled, each of cameras 510, 520 and 530 includes an FSM.

As with bank 400, bank 500 may scan a scene, for example, as 12 sub-scenes or regions arranged in a 6 x 2 configuration, a 4x3 configuration, or any other configuration of contiguous or noncontiguous regions, as described below with reference to FIGS. 8-12.

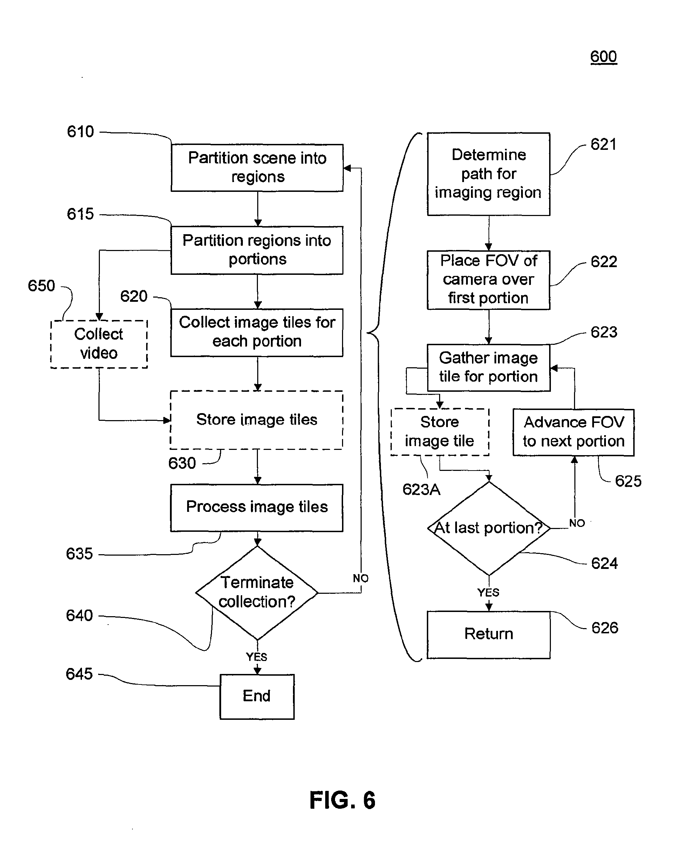

Referring now to FIG. 6, there is illustrated a method 600 for collecting exposures (image tiles) for regions of a scene and storing and processing the collected image tiles, in accordance with an exemplary embodiment of the invention. It is contemplated that bank 400 or 500 under the direction of a control processor, such as control processor 450 or 450', may perform the steps of method 600.

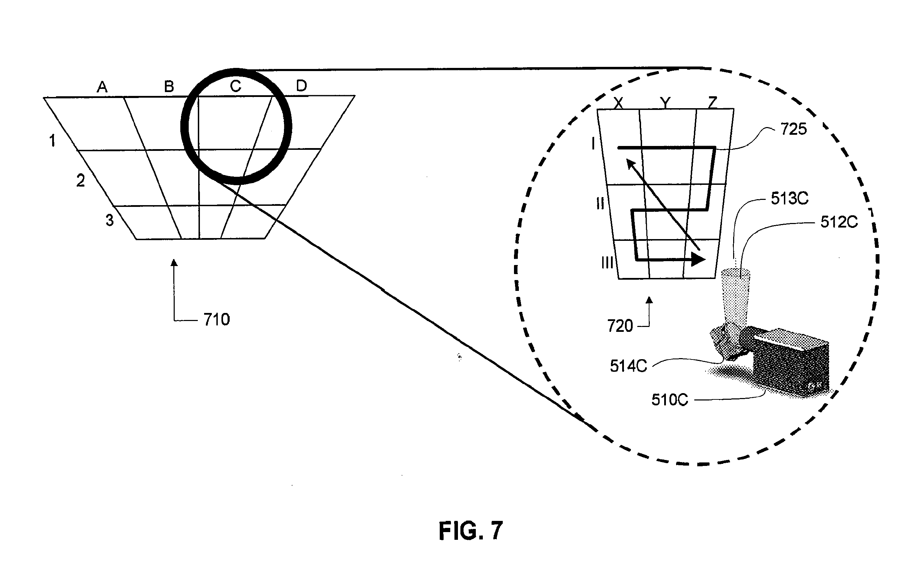

Method 600 begins with step 610 of partitioning a scene into multiple regions. In an exemplary embodiment, the scene is partitioned into 12 regions, (e.g., regions A1-D1, A2-D2, and A3-D3), in a 4 x 3 configuration, such as that illustrated in FIG. 7 (described below).

Next, step 615 partitions each region of the scene into several portions. In the exemplary embodiment, each of 12 regions of the scene is partitioned into nine portions, (e.g., portions, X-I through Z-I, X-II through Z-II, and X-III through Z-III), in a 3 x 3 configuration, such as that illustrated in FIG. 7 (described below).

Processing continues to step 620, in which method 600 gathers multiple image tiles for each region, each image tile corresponding to a respective portion of each region. The image tiles are gathered such that adjacent image tiles overlap. Overlap facilitates mosaicking. In the exemplary embodiment, step 620 gathers nine image tiles corresponding to portions X-I through Z-III for each of the 12 regions. Thus, a total of 108 image tiles are collected for the scene.

Step 620 includes sub-steps 621 through 626 which are now described. Sub-steps 621-626 image all regions of the scene. In an exemplary embodiment, these sub-steps are performed for each region of the scene, in parallel, so that image tiles for the regions are collected in parallel. This method of collecting image tiles is referred to herein as a "parallel collection method." In another exemplary embodiment, sub-steps 621-626 are performed for each region, one after another, so that image tiles for a first region are collected first, image tiles for a second region are collected second, etc. This method of collecting image tiles is referred to herein as the "serial collection method."

The description of sub-steps 621-626 refers to "a region" and "the region." It should be understood, however, that such a reference is made for convenience. Thus, the discussion below of sub-steps 621-626 is pertinent to image tile collection for all regions in the scene, whether performed in parallel or serially.

Step 620 begins with sub-step 621 in which a path outlining movement of an FOV of an FSM camera is determined. Processing continues to sub-step 622 in which the FSM camera directs its FOV over a first portion of a region. Sub-step 623 collects an image tile corresponding to the first portion. Sub-step 624 determines whether the FOV of the FSM camera is directed to a final portion of the region being imaged (the final portion indicated by the path determined in step 621). If it is determined, by sub-step 624, that the portion imaged in sub-step 623 is the last portion, processing returns to step 620 via sub-step 626. If it is determined, however, that the portion imaged is not the last portion, processing continues to sub-step 625, in which the FSM camera steers the FOV to the next portion ("new portion") along the path. Processing then loops back to sub-step 623 for imaging the new portion, i.e., collecting a further image tile. Processing loops through sub-steps 623, 624 and 625 until step 624 determines that the last image tile of the region has been collected. The further image tile is imaged such that it slightly overlaps adjacent image tiles (adjacent in the scene being imaged).

In one exemplary embodiment of method 600, each image tile is stored in a step 623A after it is collected in step 623. In another exemplary embodiment of method 600, image tiles collected in step 620 for a region are stored in a step 630 after the last image tile in a region is collected. In either embodiment, the collected image tiles may be stored in a local data recorder (local to the FSM camera) or in a remote data recorder (remote from the FSM camera). Examples of such data recorders include data recorder 440 illustrated in FIG. 4A and data recorders 460 and 470 illustrated in FIG. 4B. Each image tile may be stored with a time stamp, frame number, and appropriate location data.

Whether the image tiles are stored in step 623A or in step 630, processing continues to step 635, in which the collected image tiles are processed as desired or required. The extent of any processing performed in step 635 may include (1) no further processing of the image tiles as they are collected and stored, (2) transmission of the image tiles to external processing circuitry (external to where the image tiles are collected and/or stored) for further processing, and/or (3) mosaicking the collected image tiles in a local or remote control processor.

Mosaicking the collected image tiles in step 635 is now described. Mosaicking may make use of one of two methods. In a first method, step 635 mosaicks all collected tiles corresponding to a particular time into composite images of each region. These composite images are then mosaicked into a composite image of the scene. The composite images of the regions or scenes may be stored in a local or remote data recorder, such as any of the kind heretofore described, and/or transmitted to external processing circuitry for further processing including storage, image editing, object recognition, etc.

In a second method, step 635 mosaicks all collected image tiles of the regions corresponding to a particular time directly into an image of the scene. In this embodiment, rather than mosaicking the tiles of the various portions of the regions into composite images of the regions and then mosaicking the composite images of the regions into a composite image of the scene, the tiles for all of the regions are mosaicked directly into a composite image of the scene. The composite image may be stored in a local or remote data recorder, such as any of the kind heretofore described, and/or transmitted to external processing circuitry for further processing including storage, image editing, object recognition, etc.

Method 600 continues to step 640, in which a determination is made to terminate image tile collection. The determination may be based on whether the scene being imaged is no longer in view. If it is determined that the image tile collection is to be terminated, processing continues to step 645 and image collection ends. Otherwise, processing branches to step 610 and reacquires image tiles for each portion of a region. Reacquisition continues to collect and store image tiles for real-time or subsequent mosaicking.

Step 635 is now described in more detail. In an exemplary embodiment, after image tiles are collected for a particular time and stored in step 623A or step 630, either in volatile memory, non-volatile memory, a data recorder, etc., they are available in step 635 for generating a composite image under the direction of a user. In such an embodiment, in step 635, a user may select a location for a scene for which one or more composite images are to be generated and a time or time period for which the one or more composite images are to be generated. Generally, the user may identify the location by defining the boundaries in terms of latitude and longitude of the scene for which the user desires a composite image to be constructed. Alternatively, the user may identify a center point in terms of latitude and longitude for the scene. The method then accesses the data recorder where the image tiles are stored to retrieve the image tiles having positions (as indicated by their location data) corresponding to the selected location and having time stamps corresponding to the selected times. The method then computes the one or more composite images corresponding to the selected time(s) by mosiacking the image tiles. The one or more composite images may be presented to the user for viewing as still frames, sequentially as video (in the case of the user selection a time period over which composite images are to be computed), or stored for later retrieval.

In another exemplary embodiment, method 600 includes a step 650 in which one or more high resolution videos of one or more respective regions or portions of regions of a scene are gathered. Such videos may be captured by FSM cameras not used to collect image tiles in step 620. The collected video is stored in step 630 as a sequence of image tiles, each with a frame number, time stamp, and location data. It is contemplated that step 650 may be performed in parallel with step 620.

Referring next to FIG. 7, there is illustrated an example of method 600 applied to imaging a scene 710, in accordance with an exemplary embodiment of the invention. As shown, scene 710 is partitioned into 12 sub-scenes or regions in a 4 x 3 array, which are formed by the projections of 12 cameras, perhaps in an arrangement as 400 or 500. The regions are identified by column designators A through D and row designators 1 through 3. The top-left region in scene 710 is referred to as region A1; the next lower region is referred to as region A2; etc. Partitioning of scene 710 into 12 sub-scenes or regions may be performed in step 610 of method 600.

Although scene 710 is partitioned into 12 regions in a 4 x 3 configuration, it will be understood that other configurations are possible. For example, scene 710 may be partitioned into 12 regions in a 2 x 6 configuration. Alternatively, scene 710 may be partitioned into four regions in a 2 x 2 configuration, or six regions in a 2 x 3 configuration. Additionally, although FIG. 7 illustrates partitioning and imaging a scene 710, which has a certain location, it is understood that because bank 400 and 500 comprise cameras with FSMs, a scene being imaged may be in a different position or larger or small than scene 710.

Each region of scene 710 is further partitioned into multiple portions. More specifically, in this illustration each region is partitioned into nine portions. For example, region C1 (also indicated as "region 720") is partitioned into nine portions which are identified by column designators X through Z and row designators I through III. The top-left portion of region 720 is referred to as portion X-I; the top-middle portion of region 720 is referred to as portion Y-I; etc. Partitioning of each region of scene 710 may be performed in step 615 of method 600.

Each FSM camera in a bank of FSM cameras is used to scan or image a respective one of the regions in scene 710. Because there are 12 regions, a bank of 12 FSM cameras, such as bank 400 or 500, may be used to scan each of the 12 regions. It will be understood that banks of FSM cameras having configurations other than banks 400 and 500 may be used to scan scene 710 and that scene 710 may be divided into a number of regions other than 12.

As an example, each of FSM cameras 510A-D, 520A-D, and 530A-D scans a respective region of scene 710 to collect several image tiles. Scanning of each region is performed in step 620, which includes sub-steps 621-626. FIG. 7 illustrates the gathering of image tiles for region 720 using FSM camera 510C. Although FIG. 7 and the discussion below describes using FSM camera 510C to gather image tiles for region 720, it is contemplated that cameras in bank 500 other than FSM camera 510C or that cameras in bank 400 may be used to gather image tiles for region 720. Furthermore, although FIG. 7 and the discussion below describes collecting nine image tiles for region 720, collecting greater or fewer than nine images tiles is contemplated.

Using exemplary path 725, FSM 514C steers FOV 512C and LOS 513C of camera 510C through the various portions of region 720. Path 725 is determined by step 621 of method 600. Accordingly, FSM 514C directs FOV 512C and LOS 513C of camera 510C to portion X-I, as performed in step 622, and captures an image tile of portion X-I, as performed in step 623.

Because portion X-I is not the last portion of region 720, sub-step 624 passes processing to sub-step 625, where camera 510C moves FOV 512C and LOS 513C to portion Y-I. Camera 510C then collects a tile for portion Y-I, as performed in step 623. The FOV 512C and LOS 513C is then moved to portions Z-I, Z-II, Y-II, X-II, X-III, Y-III, and Z-III, collecting tiles for these portions, as performed in steps 623-625. The scan pattern illustrated in FIG. 7 may generally be described as a backward "S" pattern. It is contemplated that the scan pattern is not limited to a backward "S" pattern but may follow an "S" pattern, a spiral pattern of some form, etc. chosen based on criteria, such as minimization of temporal displacement between tiles, specified by a user, software code, etc.

As camera 510C collects the image tiles of regions A1-D3 of scene 710, they are stored in a data recorder, as performed in step 623A or step 630. In an exemplary embodiment, each image tile is stored in volatile memory, non-volatile memory, a data recorder, etc. with a time stamp, frame number, and location data. Following storage, a composite image may be generated from the collected image tiles, as performed in step 635, and displayed or further processed and stored. Further, more imagery may be acquired, if so decided in step 640.

If step 640 decides to continue image collection, processing loops back to step 610, where scene 710 is again (optionally) repartitioned into regions. FSM 514C moves FOV 512C and LOS 513C back to portion X-I, resetting the position of FOV 512C of camera 510C, as performed in step 622. Scanning and collecting may be repeated to again collect the nine image tiles for region 720 (and all regions of scene 710, for that matter), according to step 620 and associated sub-steps 621-626.

Because each camera in bank 500 is used to scan nine portions of each region of scene 710, bank 500 may use fewer cameras than that required for the bank of fixed cameras illustrated in FIG. 1, while still covering a larger area at a higher resolution. If the bank of fixed cameras illustrated in FIG. 1 is used, achieving the image resolution of bank 500 requires 108 cameras, each having an FOV at least as large as any of portions X-I through Z-III of regions of scene 710. A bank of 108 cameras requires more space, consumes more energy, and is more expensive to construct than bank 500.

If fewer than 108 cameras were used in a bank of fixed cameras, either or both of total FOV and spatial resolution of the fixed cameras would need to be reduced as compared to bank 500. Thus, bank 500 has numerous advantages, compared to the bank of fixed cameras illustrated in FIG. 1.

By dividing scene 710 into several regions and scanning each region using a unique FSM camera in parallel, bank 500 may image or capture scene 710 faster than if only one FSM camera were used, such as the one illustrated in FIG. 2. Additionally, bank 500 achieves a higher temporal scan rate than the linear scanner illustrated in FIG. 3, without requiring as much work to accurately mosaic the pixels into an monolithic image. Thus, the scanning technique of bank 500, as illustrated in FIGS. 6 and 7, can produce a higher quality composite image than that produced by linear scanner 300. Moreover, the scanning technique of bank 500 allows for multiple focal lengths, which in turn helps to maintain a more uniform spatial sampling distance as the line of sight to the target becomes greater.

In an exemplary embodiment, the scan patterns of each camera in bank 500 is phased from one another to minimize peak power demands. In such an embodiment, an image tile in region B1 is collected after an image tile in region A1 is collected; an image tile in region C1 is collected after an image tile in region B1 is collected; etc. Thus, although the regions in scene 710 are scanned in parallel, actual image tile collection is phased so that bank 500 is not collecting more than one image tile at any precise point in time. Phasing the scan patterns, i.e., the image tile collection, allows for the use of smaller power supplies, wires, EMI filters, etc.

Further, where it is possible, bank 500 moves the mirrors for the FSM cameras in a constant acceleration to minimize peak power demands. When this is not possible, bank 500 may phase the impulse accelerations of each mirror. Such movement also allows for the use of smaller power supplies, wires, EMI filters, etc.

Referring now to FIG. 8, there is illustrated an example of method 600 applied to imaging a scene 810, in accordance with an exemplary embodiment of the invention. In one embodiment (herein a "first embodiment" for purposes of the description of FIG. 8), scene 810 is partitioned into the following 12 sub-scenes or regions: A1 through D1, A2 through D2, A3, 830, D3, and 840. The partitioning of scene 810 is not identical to that of scene 710, as scene 810 does not include separate regions B3 and C3 as does scene 710. Rather, scene 810 includes a region 830 that is a combination of what would be regions B3 and C3. Further, scene 810 includes a region 840 not present in scene 710.

In another embodiment (herein a "second embodiment" for purposes of the description of FIG. 8), scene 810 is partitioned into the following 12 sub-scenes or regions: A1 through D1, 840, B2 through D2, and A3 through D3. The partitioning of scene 810 in the second embodiment is not identical to that of scene 710, as scene 810 does not include a full region A2 but, rather, a region 840 that is a portion of what would be region A2. The partitioning of scene 810 in the second embodiment is also not identical to that of the first embodiment, as in the second embodiment, scene 810 includes separate regions B3 and C3 (respectively labeled as 830A and 830B in FIG. 8) whereas, in the first embodiment, scene 810 includes a single region 830.

In either of the first or second embodiments discussed above, partitioning of scene 810 is performed according to step 610 of method 600. Each region of scene 810 is partitioned into several portions, although region 840 need not be partitioned when it is smaller than the FOV of the camera capturing it, as described below. In the first embodiment, regions A1-D1, A2-D2, A3 and D3 are partitioned into nine portions, similarly to the portions of region 720 in FIG. 7, although it is contemplated that these regions may be partitioned into portions numbering other than nine. Region 830 may be partitioned into 18 or any other number of portions by step 610 of method 600. In the second embodiment, regions A1-D1, A2-D2, A3, B3 (830A), C3 (830B), and D3 are partitioned into nine portions, similarly to the portions of region 720 in FIG. 7, although it is contemplated that each of these regions may be partitioned into portions numbering other than nine.

The regions of scene 810, apart from region 840, are scanned or imaged using a bank of FSM cameras, such as bank 500, according to step 620 and sub-steps 621-626 of method 600. In the first exemplary embodiment, cameras 510A-D, 520A-D, 530A and 530D are used to scan respective regions A1 through D1, A2 through D2, A3 and D3. Region 830 (other than region 840) is scanned by either camera 530B or camera 530C. In the second exemplary embodiment, cameras 510A-D, 520B-D, 530A-D are used to scan respective regions A1 through D1, B2 through D2, and A3 through D3. The collected image tiles are stored and may be recollected and stored by repeatedly executing steps 620 and 630.

FIG. 8 illustrates gathering image tiles for region C1 (also referred to as "region 820") using FSM camera 510C. To gather the image tiles for region 820, FSM 514C of camera 510C moves FOV 512C and LOS 513C along path 825 and collects image tiles for each portion. The image tiles collected for region 820, as well as the image tiles collected for all other regions in scene 810, are stored in either step 623A or step 630. Collection continues and repeats as desired, as described above for FIGS. 6 and 7.

As noted, in the first embodiment, region 830 is a combination of regions B3 and C3. Where region 830 is partitioned into 18 portions, step 621 determines a path for the movement of an FOV of FSM camera 530C through the 18 portions. It will be appreciated that because region 830 in this embodiment includes twice as many portions as any other region in scene 810, twice as many FOV movements in steps 621-626 are required compared to FOV movements of FSM cameras through the other regions in scene 810, and twice as much time may be required to scan through all of the positions. Where region 830 is partitioned into a number of portions other than 18, step 621 determines a path for the movement of the FOV of FSM camera 530C through the portions.

As described above, in both the first and second embodiments, scene 810 includes a region 840 that is an area of interest (AOI). While other cameras in bank 500 scan the other regions of scene 800, a camera in bank 500 may be devoted to AOI 840. AOI 840, because it is smaller than region A2, may be partitioned into fewer portions than other regions of scene 810. Thus, the refresh rate (temporal resolution) of image tiles collected from AOI 840 may be higher than that for image tiles of other regions in scene 810. In an exemplary embodiment, AOI 840 may be small enough to allow for collection rates at video rates without step movement of the collecting camera's FOV within AOI 840 along a scan path, such as 725 or 825 described above. Thus, video of AOI 840 may be collected at a frame rate limited by the collecting camera's collection speed and not limited by the collecting camera's FSM's stepping speed. It is contemplated that although such collecting camera's FOV would not be undergoing step movement, it may still be slewed to compensate for aircraft or platform motion.

The more steps that are required to cover AOI 840, the lower the temporal refresh rate will be. The smaller AOI 840 is, the higher the potential temporal refresh rate will be. Video monitoring of AOI 840 may be desired, for example, if AOI 840 includes one or more moving objects.

It is contemplated that as an object in AOI 840 moves to other regions of scene 810, the camera in bank 500 tracking it may be switched from one camera in bank 500 to another. Thus, using the techniques described above for FIG. 8, the cameras in bank 500 are able to coordinate with each other to cover larger regions at lower temporal resolution while tracking moving objects at higher temporal resolution.

After image tiles corresponding to the regions of scene 810 are collected in step 620 and stored in step 623A or step 630, either locally or remotely and in volatile memory, non-volatile memory, a data recorder, etc., and after any video for AOI 840 is collected in step 650 and stored in step 630, stored image tiles and video may be processed in step 635. Such processing may include mosaicking the image tiles for all of the regions of scene 810 over time as a sequence of composite images (video). The sequence, presented as video, will include regions having lower refresh rates and regions, such as that corresponding to AOI 840, having higher refresh rates. In an exemplary embodiment, the portion of the composite video corresponding to the video of AOI 840 results in a video refresh rate. The remainder of the composite video corresponding to the repeatedly refreshed composite images formed in step 630 results in a refresh rate lower than the video refresh rate, as it is generated by collecting image tiles by the sub-steps of step 620.

In an exemplary embodiment, bank 500 may switch between the techniques described in FIG. 7 and FIG. 8.

Referring now to FIG. 9, there is illustrated an embodiment of a configuration mode 900, including areas of interest 910, 920 and 930, in accordance with an exemplary embodiment of the invention. Each of areas 910, 920 and 930 is located within a FOV 940 of the imaging system that images areas 910, 920, and 930. FOV 940 describes the total area that may be scanned, in whole or in part, by a bank of FSM cameras, e.g., bank 400 or 500.

Each of areas 910, 920, and 930 is partitioned into four clustered regions. Area 910 is divided into a 2 x 2 array (cluster) of regions 910A-D; area 920 is divided into a 2 x 2 array (cluster) of regions 820A-D; and area 930 is divided into a 2 x 2 array (cluster) of regions 930A-D.

In one exemplary embodiment, a bank of 12 FSM cameras, such as bank 400, scans areas 910, 920 and 930. Cameras 410A, 410B, 420A and 420B, respectively, scan regions 910A-D; cameras 410C, 410D, 420C and 420D, respectively, scan regions 920A-D; and cameras 410E, 410F, 420E and 420F, respectively, scan regions 930A-D. It will be understood that assignments of cameras 410 and 420 to areas 910, 920 and 930 are not so limited. Other assignments of cameras 410 and 420 are contemplated. In addition, a bank of 12 FSM cameras, such as bank 500, having an arrangement different from bank 400 may be used to scan areas 910, 920 and 930. In other words, a bank of 12 FSM cameras may be arranged in three rows of four cameras, such as bank 500, instead of two rows of six cameras, such as bank 400. In embodiments of areas 910, 920 and 930 comprising clusters numbering other than four, a bank of FSM cameras numbering other than 12 may be used.

In one embodiment, cameras 410 and 420 scan areas 910, 920 and 930 using method 600 executed for each of areas 910, 920 and 930. Because each area includes four regions, rather than 12 regions (as in scene 710), method 600 partitions each of areas 910, 920 and 930 into only four regions. Thus, each of the regions are then partitioned into nine portions, e.g., in a 3 x 3 configuration as in FIG. 7. These partitioned portions are scanned in accordance with method 600, e.g., as region 720 in FIG. 7 is scanned. It is contemplated that the regions may be partitioned into a number of portions other than nine.

In another exemplary embodiment, each of the portions are scanned as video without the step movement of the collecting cameras' FOVs in their respective portions, e.g., as AOI 840 of FIG. 8 is scanned. The collected image tiles are stored and may be processed as heretofore described. In such an embodiment, by clustering the FOVs and not requiring step movement, video may be collected at a frame rate limited by the collecting system's collection speed and not limited by the FSMs' stepping speed.

Although each of areas 910, 920, and 930 are illustrated as comprising four clustered regions, areas comprising a number of clustered regions other than four are contemplated. Further, although FIG. 9 illustrates three areas (areas 910, 920, and 930), other numbers of areas are contemplated. For example, in an exemplary embodiment, 12 regions may be clustered together in a 1 x 12 configuration. Such a configuration may be useful in a linear scanner, such as that illustrated in FIG. 3, to sweep the FOVs (arranged in a 1 x 12 configuration) of the cameras across a scene to image it.

Further, it is contemplated that areas 910, 920, and 930 need not lie in the same plane. For example, they may each lie in planes perpendicular to one another. Imaging onboard an aircraft may use such a configuration when, for example, the FOVs of some of the cameras onboard the aircraft are directed forward, the FOVs of some are directed to the right, the FOVs of some are directed down, etc.

Referring now to FIG. 10, there is illustrated an embodiment of a configuration mode 1000, in accordance with an exemplary embodiment of the invention. FIG. 10 illustrates, for example, 12 independent regions containing objects of interest. Each of the 12 independent regions is located within a Synthetic FOV 1005 which describes the total area that may be scanned, in whole or in part, by a bank of FSM cameras, e.g., bank 400 or 500.

Some of the objects, such as those in regions 1010, 1030, 1040, and 1045 are stationary. They are referred to as "stationary objects within stationary regions." Other objects, such as those in regions 1015, 1020, 1025, 1035, 1050, 1055, 1060 and 1065, are moving. They are referred to herein as "moving objects within tracked regions." A bank of FSM cameras, such as bank 400 or 500, scans the stationary and tracked regions to, respectively, image the stationary and moving objects using method 600.

As may be seen in FIG. 10, some of the stationary or tracked regions are contiguous and some are isolated. For example, stationary region 1010 is separate from other regions, but stationary regions 1030 and 1045 are contiguous, as are tracked regions 1050 and 1055.

Techniques for scanning or tracking stationary and/or moving objects will now be described. A first technique uses the scanning technique of step 620 for collecting image tiles. A second technique uses the video capture technique of step 650 for collecting video.

In the first technique, the regions (stationary or tracked) containing the objects are partitioned into portions, in step 615. The image tiles for each portion are collected in step 620. The image tiles are stored. In the second technique, video for each region is collected in step 650 and stored in step 650. It is contemplated that some regions in FIG. 10 may be scanned using the first technique while others are scanned using the second technique. Collected image tiles and video may be processed in step 635 as previously described.

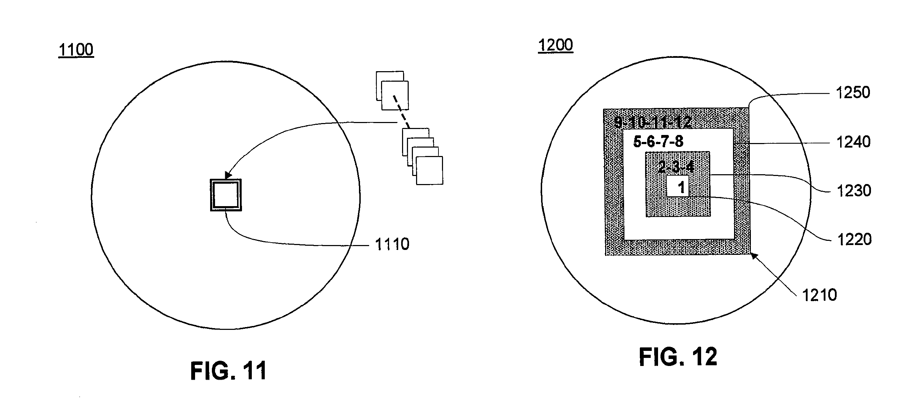

Referring now to FIG. 11, there is illustrated an embodiment of a configuration mode 1100, in accordance with an exemplary embodiment of the invention. In one exemplary embodiment, configuration mode 1100 is a slow motion mode. In another exemplary embodiment, configuration mode 1100 is a stereo mode.

In the slow motion mode, the cameras of an FSM bank, such as bank 400 or 500, are pointed at the same region 1110. Each camera in the bank is operated in a video mode capturing region 1110. The start of the integration times (e.g., trigger) for the FSM cameras are slightly phased. The resulting videos are combined to form a video image with a high frame rate. The resulting frame collection rate is equal to the sum of the individual frame collection rates of each FSM camera.

For example, if FSM camera bank 500 collects video of scene 1110, twelve FSM cameras are slightly phased. Assuming, for example, that the video rate of each camera is 20 frames per second, a total of 240 frames per second is collected by camera bank 500, as they are phased from one another. Thus, the effective frame rate of FSM camera bank 500 becomes 240 frames per second, which is 12 times that of any FSM camera. Extremely fast moving objects (explosions, planes, etc.) may, therefore, be captured and played in slow motion.

In the stereo mode, two or more cameras of an FSM bank, such as bank 400 or 500, are pointed at the same region 1110. Each camera in the bank is operated in a video mode capturing region 1110. Video collection for two or more of the FSM cameras may be synchronized to capture video in stereo. Further, video collection for a first pair of FSM cameras may be synchronized and video collection for a second pair of FSM cameras may be synchronized while the video collection for the first pair is phased from the second. Thus, the effective frame rate of the FSM bank may be increased while providing stereo imaging.

Referring now to FIG. 12, there is illustrated an embodiment of a configuration mode 1200, in accordance with an exemplary embodiment of the invention. Configuration mode 1200 is also referred to herein as fovea mode 1200. As shown, scene 1210 is partitioned into several regions arranged as a box-within-boxes. More specifically, scene 1210 is partitioned into four regions: region 1220 located at the center of scene 1210, region 1230 surrounding region 1220, region 1240 surrounding region 1230, and region 1250 surrounding region 1240. Thus, region 1230 overlaps region 1220; region 1240 overlaps region 1230; etc.

FSM cameras, such as bank 500, scan the concentric regions of scene 1210. One FSM camera of bank 500 captures video of scene 1210, and the other FSM cameras of bank 500 capture the remaining regions of scene 1210 at slower rates, e.g. 1/2, 1/3, 1/4, etc., using the techniques described above with respect to FIGS. 6 and 7. The result is that imagery associated with outer regions are updated more slowly, while important areas located inwardly toward the center are updated more quickly. Collected images and video are stored for later processing using techniques heretofore described.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A system for imaging a scene, comprising:
a plurality of cameras, each camera including a field steering mirror;
a controller coupled to the cameras, the controller configured to coordinate the field steering mirrors of the cameras to collect a plurality of image tiles of a scene using the cameras; and
a storage device coupled to the cameras and the controller, the storage device configured to receive the collected image tiles and store the collected image tiles with associated location data.

2. A controller for a bank of cameras, each camera having a field steering mirror, the controller configured to:
direct the field steering mirrors of the cameras to collect a plurality of image tiles of a scene; and
store the collected image tiles in a storage device, each of the collected image tiles being stored with location data identifying a location in the scene corresponding to the collected image tile.

3. The system or controller of claim 1 or 2, wherein the controller is further configured to
- partition the scene into a plurality of regions and to direct the field steering mirror of each camera to collect image tiles of a respective region, and in particular to partition each of the regions into a plurality of portions and to direct the field steering mirror of each camera to collect an image tile of each portion of a respective region, thereby collecting the plurality of image tiles; and/or
- calculate a path for a movement of a field of view of each camera through its respective region and to direct the field steering mirror of each camera to move its field of view along the calculated path to collect the image tiles; and/or
- direct the field steering mirror of each camera to move the field of view of each camera from an end of the calculated path to a beginning of the calculated path after a last image tile of the respective region for each camera is collected.

4. The system or controller of claim 3, wherein the regions are contiguous and adjacent collected image tiles overlap one another.

5. The system or controller of one of claims 1 to 4, wherein the controller is further configured to mosaic image tiles stored in the storage device into a composite image.

6. The system or controller of one of claims 1 to 5, wherein one or more of the regions overlap one another, and the controller is further configured to collect the image tiles for the one or more regions by
- phasing the collection of the image tiles for the one or more regions from one another; and/or
- synchronizing the collection of the image tiles for the one or more regions.

7. The system or controller of one of claims 1 to 6, wherein the one or more regions are arranged concentrically, and the controller is further configured to:
- collect video of a central region using a first one of the cameras;
- direct the field steering mirrors of cameras other than the first one to collect a plurality of image tiles of the one or more regions other than the central region; and
- store the collected video and the collected plurality of image tiles of the one or more regions other than the central region in the storage device.

8. The system or controller of one of claims 1 to 7, wherein the controller is further configured to direct one of the cameras to collect a video of a portion of the scene while using other cameras to collect image tiles at a temporal resolution less than or equal to a maximum frame rate of the other cameras.

9. The system or controller of one of claims 1 to 8, wherein the controller is further configured to direct each of the cameras to collect video by phasing the video collection of each camera from one another.

10. A method of imaging a scene, the method comprising the steps of:
(a) partitioning a scene into a plurality of regions;
(b) partitioning each of the plurality of regions into a plurality of portions;
(c) collecting an image tile for each of the plurality of portions of the regions in a predetermined order using a camera having a field steering mirror; and
(d) storing the collected image tiles, each with a time stamp and location data.

11. The method of claim 10, further comprising:
(e1) receiving a selection of a time frame and a location from a user;
(f1) retrieving stored image tiles each having a time stamp and location data corresponding to the selected time and location; and
(g1) mosaicking the retrieved image tiles into a composite image; and/or
(e2) capturing a portion of the scene as a video; and
(f2) storing the video with time and location data.

12. The method of claim 10 or 11, further wherein the step (c) comprises:
(e) receiving a selection of a time frame and a location from a user;
(f) retrieving stored image tiles each having a time stamp within the selected time frame and location data corresponding to the selected location;
(g) retrieving a portion of the stored video, the portion corresponding to the selected time frame and the selected location;
(h) for all retrieved image tiles, mosaicking the retrieved image tiles having identical time stamps into a composite image;
(i) combining composite images formed in step (h) into a video; and
(k) combining the video resulting from step (i) with the retrieved portion of the stored video.

13. A bank of cameras comprising:
a plurality of field steering mirrors, each camera being associated with one of the field steering mirrors;
a plurality of controllers, each controller coupled to a respective camera and configured to direct the field steering mirror associated with the respective camera to collect a plurality of image tiles for a scene; and
a data bus coupled to each controller, the data bus configured to be coupled to a data recorder to store the plurality of image tiles collected by each camera with associated location data for each collected image tile.

14. The bank of cameras of claim 13, wherein the scene is partitioned into a plurality of regions and each controller is further configured to direct the field steering mirror associated with the respective camera to collect a plurality of image tiles for a respective region.

15. The bank of cameras of claim 13 or 14, wherein
- each controller is further configured to calculate a path for a movement of a field of view of the respective camera through the respective region and to direct the field steering mirror associated with the respective camera to move its field of view along the calculated path to collect the plurality of image tiles for the respective region; and/or
- two or more of the cameras are associated with a same one of the field steering mirrors, the one of the field steering mirrors being controlled by one of the controllers to collect image tiles for the two or more of the cameras.
